Europäisches Patentamt

European Patent Office

Office européen des brevets

(19)

(11) Publication number: **0 179 633**
**A1**

(12) **EUROPEAN PATENT APPLICATION**

(21) Application number: **85307551.3**

(22) Date of filing: **18.10.85**

(51) Int. Cl.⁴: **B 25 J 18/06**
**B 25 J 17/02**

(30) Priority: **19.10.84 GB 8426448**

(43) Date of publication of application:
**30.04.86 Bulletin 86/18**

(84) Designated Contracting States:
**BE DE FR GB IT NL SE**

(71) Applicant: **Green, Alan Francis**
**32 Court Road**
**Cranfield Bedfordshire MK43 ODK(GB)**

(72) Inventor: **Green, Alan Francis**
**32 Court Road**
**Cranfield Bedfordshire MK43 ODK(GB)**

(74) Representative: **Garratt, Peter Douglas et al,**
**Mathys & Squire 10 Fleet Street**
**London EC4Y 1AY(GB)**

(54) **Robotic arm.**

(57) A robotic arm has an upper arm rotatable about a shoulder axis and a forearm rotatable relative to the upper arm about an elbow axis parallel to the shoulder axis. A hand or gripper assembly is mounted at the free end of the forearm for rotation about a wrist axis. Drive is taken from servo motors in the arm base through toothed drive wheels mounted on the shoulder, elbow and wrist axes respectively, which are interlinked through drive belts having toothed inner surfaces.

FIG.1

EP 0 179 633 A1

./...

FIG.2

## ROBOTIC ARM

This invention relates to robotic arms and in one important example to robotic arms suitable for use in education and experimentation.

It is highly desirable that those being trained in robotics technology should gain practical experience. Commercially available robots are of course expensive and, moreover, are usually not well suited for educational use in that the manner of operation is not readily observable and the control procedures are too complex for the demonstration of basic principles. This invention has as one object the provision of a robotic arm which is well suited to educational use in that it is inexpensive and of a simple construction, whilst still offering a wide range of control.

Accordingly, the present invention consists in one aspect in a robotic arm comprising a base; an upper arm connected at one end to the base for pivotal movement about a shoulder axis transverse to the length of the upper arm; arm drive means provided in the base and serving to effect pivotal movement of the upper arm about the shoulder axis; first and second shoulder wheels freely rotatable on the shoulder axis; forearm and hand drive means mounted in the base and serving to effect rotation of the first and second shoulder wheels respectively; a forearm connected to the free end of the upper arm for pivotal movement relative thereto about an elbow axis parallel to the shoulder axis; a first elbow wheel rotatably mounted on the elbow axis for movement with the forearm and a second elbow wheel freely rotatable in the elbow axis; an elbow drive belt extending around the first shoulder wheel and the first elbow wheel operatively to interconnect the same; a lower hand drive belt which extends around the second shoulder wheel and the second elbow wheel operatively to interconnect the same; a hand connected to the free end of the forearm for pivotal movement relative thereto about a wrist axis parallel to the shoulder axis; wrist wheel means rotatably mounted on the wrist axis for movement with the hand and an upper hand drive belt which extends around the second elbow wheel and the wrist wheel means operatively to interconnect the same whereby actuation of said forearm drive means effects pivotal movement of the forearm about said elbow axis and actuation of the hand drive means effects pivotal movement of the hand about said wrist axis.

Advantageously, the hand comprises a mounting part and a working part, the mounting part being connected to the forearm for rotation about said wrist axis and the working part being connected to the mounting part for pivotal movement relative thereto about a roll axis transverse to said wrist axis.

In a preferred form of the invention, the said wheels comprise gear wheels and the belts are internally toothed.

Preferably, the wrist wheel means comprises a pair of bevelled gears freely rotatable on said wrist axis and engaging an orthogonal bevelled gear mounted on the hand working part for rotation therewith about the roll axis.

Suitably, the hand drive motor means comprises two hand drive motors one serving to effect rotation of said second shoulder gear wheel the other serving to effect rotation of a third shoulder gear wheel freely rotatable on the shoulder axis, there being provided a second lower hand drive belt extending around the third shoulder gear wheel and a third elbow gear wheel freely rotatable on the elbow axis, the upper hand drive belt serving operatively to interconnect the second elbow wheel and one of the bevelled gears and a second upper hand drive belt being provided operatively to interconnect the other bevelled gear and the third elbow wheel whereby actuation of the hand drive motors in unison effects pivotal movement of the hand about the wrist axis with differential actuation of the hand drive motors effecting rotation of the working part about the roll axis.

In a preferred form of the invention, the drive means comprise respective servo motors.

Advantageously, the robotic arm further comprises a base support on which the base is mounted for relative rotation about a rotation axis orthogonal to the shoulder axis.

Suitably, said rotation axis is vertical and the base support is provided with means for moving the base support in translation over a plane surface.

It will be appreciated that the use of drive belts according to this invention enables a robotic arm to be produced which is of simple construction yet capable of accurate and reproducable movement. The location of gear wheels, both driving and idle, on the shoulder, elbow and wrist axes, respectively, leads to a particularly economic structure. The use of servo motors to drive the belts again increases the accuracy.

The invention will now be described with reference to the accompanying drawings in which:-

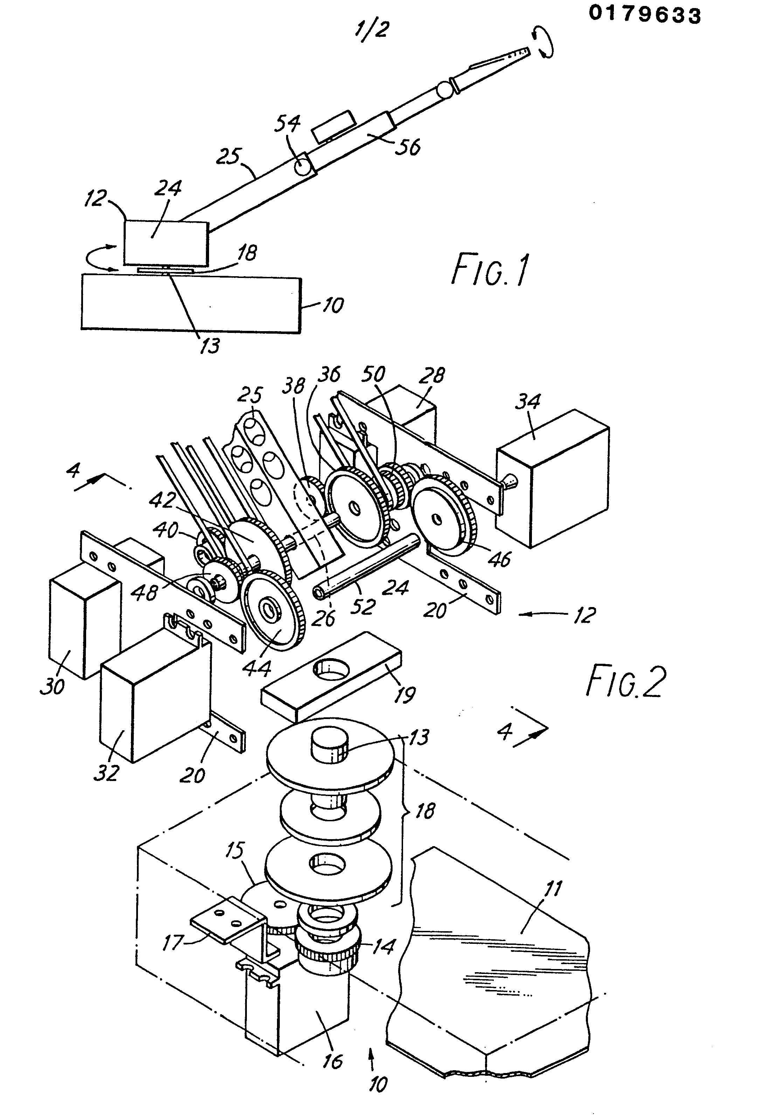

Figure 1 is a perspective view showing a robotic arm according to this invention,

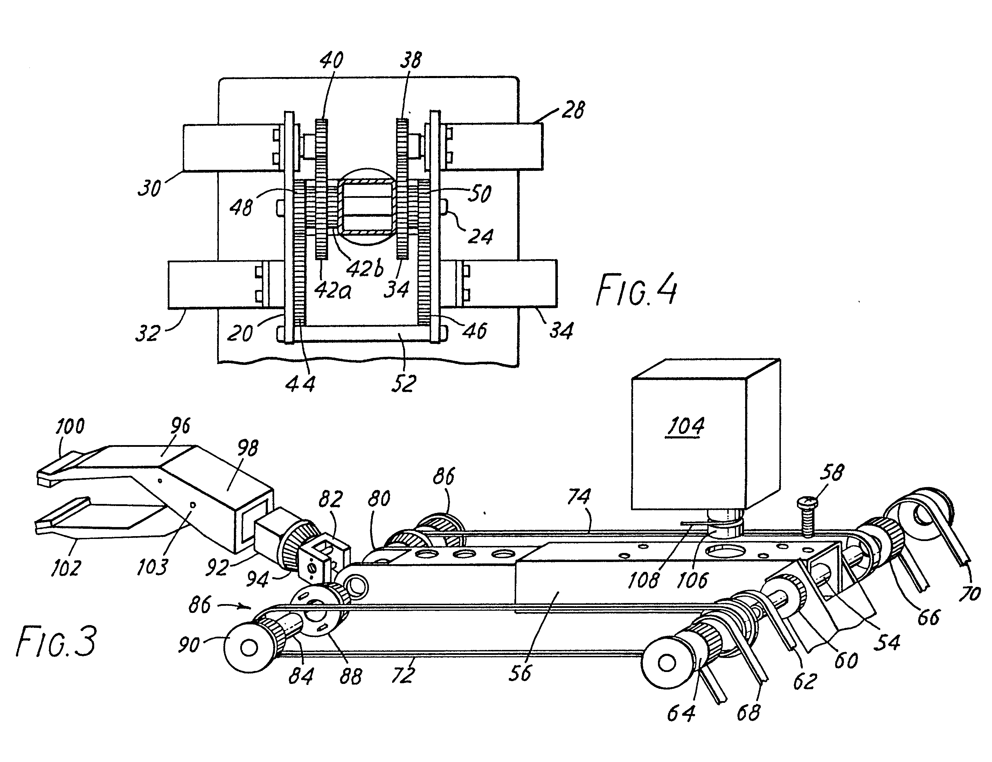

Figures 2 and 3 are exploded views of respective parts of the robotic arm shown in Figure 1, and

Figure 4 is a section generally on line 4-4 of Figure 2.

The robotic arm shown in the drawings comprises a fixed base support 10 which contains circuit boards shown schematically at 11. Ports are provided on the exterior of the base support to enable those circuit boards to be connected with a remote processor, typically a commercially available microcomputer. A base carriage shown generally at 12 is mounted for rotation about a vertical axis on hollow shaft 13. A horizontal gear wheel 14 carried on the shaft 13 meshes with an output gear 15 of a servo motor 16 which is mounted within the base support 10 on bracket 17. A washer/thrust bearing assembly 18 is provided on the shaft 13.

The carriage 12 comprises a block 19 which is rigidly secured to the shaft 13 and which extends between two H-frames 20. The carriage defines a horizontal shoulder axis 24 about which is pivotably mounted an upper arm 25 on shoulder spindle 26. The arm is formed of a plastics material and is hollow with a rectangular cross-section. Circular holes are formed in each face of the arm to reduce weight. As seen in the drawings, four servo motors are mounted in two in-line pairs on the H-frames 20 and comprise an arm drive motor 28 a forearm drive motor 30 and first and second hand drive motors 32, 34 respectively. A shoulder gear wheel 36 driven through the output gear 38 of the arm drive motor 28 is carried on the spindle 26 and fixed for rotation with the upper arm 25 such that actuation of the arm drive motor 28 effects pivotal movement of the upper arm about the horizontal shoulder axis 24. The output gear 40 of the forearm drive motor 30 meshes with an integral gear/pulley wheel assembly 42 which is freely rotatably mounted on the spindle 26. This assembly comprises a gear 42a and a toothed pulley wheel 42b. Output gears 44 and 46 respectively of the hand drive motors 32 and 34 mesh with integral gear/pulley wheel assemblies 48 and 50 respectively. The carriage 12 is completed by a spacer rod 52 extending between the H-frames 20.

At the free end of the upper arm 25 there is rotatably mounted an elbow spindle 54 which defines an elbow axis parallel to the shoulder axis 14. A forearm 56 is carried on the spindle 54 and is secured to the spindle through fixing screw 58 so as to rotate with the spindle.

The forearm 56 is of generally the same construction as the upper arm 16 although of a smaller rectangular section. The spindle 54 is formed integrally with a toothed pulley wheel 60 which meshes with an elbow drive belt 62 which meshes in turn with the pulley wheel 42a. This drive belt is formed with transverse teeth on its inner surface so as to mesh, with no possibility of slippage, with the toothed pulley wheel. It will be understood that rotation of the wheel 60 through the drive belt 62, shoulder gear wheel 42a and forearm drive motor 30 will effect pivotal movement of the forearm relative to the upper arm about the elbow axis.

Outwardly of the integral gear wheel 60, the spindle 54 carries a double width toothed pulley wheel 64. Similarly at the opposite end of the spindle there is provided a double width toothed pulley wheel 66. The double width wheels 64 and 66 mesh respectively with lower hand drive belts 68 and 70 and also with upper hand drive belts 72 and 74 respectively. Lower hand drive belts 68 and 70 mesh in turn with shoulder wheels 48 and 50 respectively.

The free end of the forearm 56 is formed with flanges 80 between which is accommodated a yoke 82. A bearing pin 84 extends through each side of the yoke and the corresponding flange 80, the pin extending outwardly of the flange to receive a unitary wrist gear assembly 86. This assembly comprises a bevelled gear 88 and a toothed pulley wheel 90. The bevelled gear 68 and drive wheel 90 are rotatable together about the axis of the bearing pin 84. The yoke 82 comprises a square section mounting plug 92 which is orthogonal to the wrist axis defined by bearing pin 84. A bevelled gear 94 is mounted on the stud 92 for rotation relative to the yoke 82 about a roll axis defined by the length of the stud.

A gripper assembly 96 has a socket 98 within which the plug 92 is received as a force fit. The gripper assembly 96 comprises an upper · jaw 100 which extends from the socket 98. A lower jaw 102 is pivotally connected to the lower jaw for rotation about a gripper axis 103 which is orthogonal to the roll axis. A torsion spring (not shown) aligned on the gripper axis serves to urge the jaws apart. A jaw closing mechanism comprises a gripper servo motor 104 mounted on the upper surface of the forearm having a bobbin 106 on the motor shaft. A cord 108 wound on this bobbin passes through the yoke 82, around a peg (not shown) in the upper jaw 100 to an anchorage in the lower jaw. The peg and anchorage are positioned so as to be aligned when the jaws are closed. It will be appreciated that actuation of the servo motor will have the effect of winding cord onto the bobbin 106 and thus drawing the two jaws together against the action of the torsion spring.

The described wrist joint enables two types of movement to be effected. If the two hand drive motors 32 and 34 are operated in unison, (so driving the bevelled gears 88 through lower drive belts 68 and 70, double width gear wheels 64 and 66, upper hand drive belts 72 and 74 , the yoke and gripper assembly will be rotated together about the wrist axis. Any differential movement between the bevelled gears 88 will effect a rolling movement of the gripper assembly about the roll axis.

The various drive belts are inwardly toothed to reduce slip relative to the gear wheels. Control over belt tension is achieved by simple rotation of belt tighteners provided both on the forearm and upper arm.

By the use of drive belts and servo motors, the described arm is capable of performing accurate and reproducable movements. The construction is nonetheless mechanically simple with the twin benefits that the manner of operation is readily observable and that the apparatus can be assembled easily from kit form.

It should be understood that this invention has been described by way of example only and a variety of modifications are possible without departing from the scope of the invention. Thus, the described gripper assembly may be replaced as appropriate by different forms of robot hand. The manner in which rolling of the hand is achieved through differential movement of the drive belts is felt to be particularly useful but in other embodiments of the invention alternative means may be provided for rolling of the hand or, indeed, rolling motion can be dispensed with. It will be further appreciated that the described arrangement of a cord and motor driven bobbin is but one of a variety of methods of operating a gripper assembly.

In a further modification, the robot hand can be enhanced with the addition of sensors. For example, a television camera may be provided adjacent the hand. The base carriage of the arm may, in a further embodiment, be mounted on a base support which has driven wheels or other means of travelling over a plane surface.

CLAIMS

1. A robotic arm comprising a base (19,20); an upper arm (25) connected at one end to the base for pivotal movement about a shoulder axis (24) transverse to the length of the upper arm; arm drive means (28, 38, 36) provided in the base and serving to effect pivotal movement of the upper arm about the shoulder axis; first and second shoulder wheels (42, 48) freely rotatable on the shoulder axis; forearm and hand drive means (30, 32) mounted in the base and serving to effect rotation of the first and second shoulder wheels respectively; a forearm (56) connected to the free end of the upper arm for pivotal movement relative thereto about an elbow axis (54) parallel to the shoulder axis; a first elbow wheel (60) rotatably mounted on the elbow axis for movement with the forearm and a second elbow wheel (64) freely rotatable in the elbow axis; an elbow drive belt (62) extending around the first shoulder wheel and the first elbow wheel operatively to interconnect the same; a lower hand drive belt (68) which extends around the second shoulder wheel and the second elbow wheel (64) operatively to interconnect the same; a hand (82, 92, 98) connected to the free end of the forearm for pivotal movement relative thereto about a wrist axis parallel to the shoulder axis; wrist wheel means (90) rotatably mounted on the wrist axis for movement with the hand and an upper hand drive belt (72) which extends around the second elbow wheel (64) and the wrist wheel means (90) operatively to interconnect the same whereby actuation of said forearm drive means (30)effects pivotal movement of the forearm (56) about said elbow axis and actuation of the hand drive means (32) effects pivotal movement of the hand about said wrist axis.

2. A robotic arm according to Claim 1, wherein the hand comprises a mounting part (82) and a working part (96), the mounting part being connected to the forearm for rotation about said wrist axis and the working part being connected to the mounting part for pivotal movement relative thereto about a roll axis transverse to said wrist axis.

3. A robotic arm according to Claim 1 or Claim 2, wherein the said wheels comprise gear wheels and the belts are internally toothed.

4. A robotic arm according to Claim 2, wherein the wrist wheel means comprises a pair of bevelled gears (88) freely rotatable on said wrist axis and engaging an orthogonal bevelled gear (94) mounted on the hand working part for rotation therewith about the roll axis.

5. A robotic arm according to Claim 4, wherein the hand drive motor means comprises two hand drive motors (32, 34) one serving to effect rotation of said second shoulder gear wheel the other serving to effect rotation of a third shoulder gear wheel (50) freely rotatable on the shoulder axis, there being provided a second lower hand drive belt extending around the third shoulder gear wheel and a third elbow gear wheel (66) freely rotatable on the elbow axis, the upper hand drive belt (72) serving operatively to interconnect the second elbow wheel (64) and one of the bevelled gears and a second upper hand drive belt (74) being provided operatively to interconnect the other bevelled gear (88) and the third elbow wheel (66) whereby actuation of the hand drive motors (32, 34) in unison effects pivotal movement of the hand about the wrist axis with differential actuation of the hand drive motors effecting rotation of the working part about the roll axis.

6. A robotic arm according to any one of the preceding claims, wherein the drive means comprise respective servo motors.

0179633

7.   A robotic arm according to any one of the preceding claims,
further comprising a base support (10) on which the base is mounted
for relative rotation about a rotation axis orthogonal to the shoulder
axis.

8.   A robotic arm according to Claim 7, wherein said rotation axis is
vertical and the base support is provided with means for moving the
base support in translation over a plane surface.

0179633

1/2

FIG.1

FIG.2

FIG.4

FIG.3

| Category | Citation of document with indication, where appropriate, of relevant passages | Relevant to claim | CLASSIFICATION OF THE APPLICATION (Int. Cl.4) |
|---|---|---|---|
| | | | EP 85307551.3 |
| X | DE – A1 – 3 308 474 (SCHLIMM)<br>　* Fig. 1,2; abstract; claims;<br>　　page 8 * | 1-3,6,<br>7 | B 25 J 18/06<br>B 25 J 17/02 |
| Y | EP – A2 – 0 101 569 (GES. FÜR DIGI-<br>TALE AUTOMATION)<br>　* Fig. 1; abstract; page 3,<br>　　lines 20,21 * | 1-5 | |
| Y | DD – A – 209 588 (ROBOTRON WEIMAR)<br>　* Fig. 1,2,4; claims; abstract;<br>　　page 4, line 24 * | 1-5 | |
| A | 　* Fig. 1 * | 7 | |
| A | DE – A1 – 3 303 497 (MITSUBISHI)<br>　* Fig. 1,2; page 3, lines 20,21 * | 1,3,7 | **TECHNICAL FIELDS SEARCHED (Int. Cl.4)**<br><br>B 25 J 17/00<br>B 25 J 18/00 |

The present search report has been drawn up for all claims

| Place of search | Date of completion of the search | Examiner |
|---|---|---|
| VIENNA | 23-12-1985 | KRAL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82